# EUROPEAN PATENT APPLICATION

(11) **EP 1 288 548 A2**
(43) Date of publication of application: **05.03.2003**
(21) Application number: 02018099.8
(22) Date of filing: 14.08.2002
(51) Int. Cl.: F16K 31/06

(54) **Solenoid operated valve with integral magnetic separator**

(30) Priority: 29.08.2001 US 941974
(71) Applicant: EATON CORPORATION, Cleveland, Ohio 44114 (US)
(72) Inventor: Bendzinski, Gregory R., Macomb Township, Michigan 48044 (US); Moreno, Jorge A., Auburn Hills, Michigan 48326 (US)
(74) Representative: Patentanwälte Rüger, Barthelt & Abel

(57) **Abstract**

A solenoid operated valve having a valve obturator moved by an armature disposed within a coil. A stationary pole piece is disposed to define with the end of the armature cooperating opposing surfaces defining a working air gap. One of the cooperating surfaces has an annular rib (24) formed integrally on one of the pole piece (21) and armature with the rib operative to prevent sufficient flux concentration to cause residual magnetic latching of the closed air gap upon energization and consequent armature sticking when the coil is de-energized.

## Description

### BACKGROUND OF THE INVENTION

The present invention relates to solenoid operated valves of the type intended for operation on a relatively low voltage power source such as 12 volts DC found on board motor vehicles. Solenoids operated on a low voltage direct current supply for automotive applications require a minimum amount of current draw and further require a minimum amount of ferromagnetic magnetic material in the magnetic circuit to minimize weight and volume to enable installation in small spaces. A particular application of a solenoid operated valve on board a motor vehicle is that of an electronically controlled valve employed for controlling the flow of hydraulic fluid in a circuit for control of the shifting in an automatic power transmission on the vehicle.

The aforesaid solenoid operated valve for vehicle usage typically has a solenoid mounted on a valve body which has an inlet with at least one outlet controlled by an obturator moved with respect to a valve seat by an armature disposed within the coil of the solenoid. Valves of this type are known to have a ferromagnetic pole piece disposed within the coil for defining a working air gap with the armature. Upon energization of the coil and closure of the working air gap, residual magnetism is often present and upon switching off of the current to the coil prevents the air gap from opening and spring biased return of the armature to its de-energized position.

It is known in the art to provide a non-magnetic separator of minimum thickness in the air gap to prevent residual magnetism in the solenoid armature and pole piece from latching the air gap closed and retaining the armature in the actuated position when current is turned off to the coil.

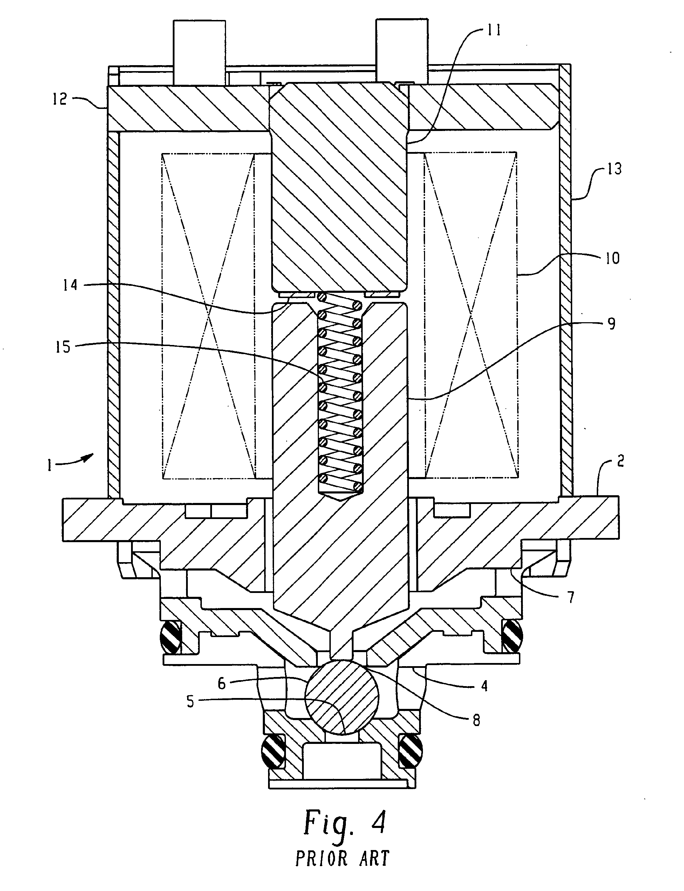

Referring to Figure 4, a known solenoid valve capable of operating on 12 volt direct current energization, is illustrated generally at 1 and has a valve body 2 with a reduced diameter lower portion having an inlet 3 formed in the end thereof and a signal outlet port 4 adjacent a valve seat 5 which has an obturator 6 closed thereagainst. A return or exhaust port 7 is also provided on the body and communicates with the signal port through a second valve seat 8.

The valve 1 has a moveable armature 9 which has a lower end thereof extending through the valve seat 4 and contacting the obturator 6 for effecting movement thereof. The solenoid is surrounded by a coil 10 which has a stationary pole piece 11 extending partially therein from the upper end thereof which pole piece has an annular flux collector 12 attached thereto. An outer casing 13 serves to cover the coil and complete the flux loop thereabout and is attached to the valve body 2 at its lower end and the flux collector 12 at its upper end.

The upper end of the armature 9 forms a working air gap with the lower end of the pole piece 11 into which is disposed a thin shim 14 of non-magnetic material such as brass. The shim 14 serves to prevent complete closing of the working air gap between the upper end of the armature and the pole piece and prevents magnetic latching due to residual magnetism in the pole piece in the armature. A spring 15 provides downward movement of the armature, upon deenergization of the coil, and maintains the armature and obturator in the downward position closing the inlet 3.

In high volume mass production of solenoid valves of the above described type employed for passenger car and light truck transmission shift control applications, it has been found prohibitively costly and complex to assemble the brass shim in the valve during manufacturing. Accordingly, it has been desired to provide a way or means of eliminating the problem of latching due to residual magnetism in the armature or pole piece in a manner which is simple and relatively low cost for high volume production.

### BRIEF SUMMARY OF THE INVENTION

The present invention provides a solution to preventing latching of the armature to the pole piece in a solenoid operated valve, and particularly such a valve operated on low voltage direct current power supply as found on board a motor vehicle. The valve of the present invention has an annular raised rib formed on either the pole piece or the armature to prevent complete closure of the air gap and thus prevents sufficient flux concentration from residual magnetism to enable the return spring to move the armature to its de-energized position. In the preferred practice of the invention, the annular rib is formed integrally with either the pole piece or the armature by powdered metal techniques.

### BRIEF DESCRIPTION OF THE DRAWINGS

FIG. 1 is a prospective view of the pole piece and flux collector of a solenoid operated valve of the present invention;

FIG. 2 is a section view taken along section indicating lines 2-2 of FIG. 1;

FIG. 3 is a prospective view of the armature of the valve of the present invention; and

FIG. 4 is a cross sectional view of a solenoid operated valve of the prior art employing a non-magnetic shim.

### DETAILED DESCRIPTION OF THE INVENTION

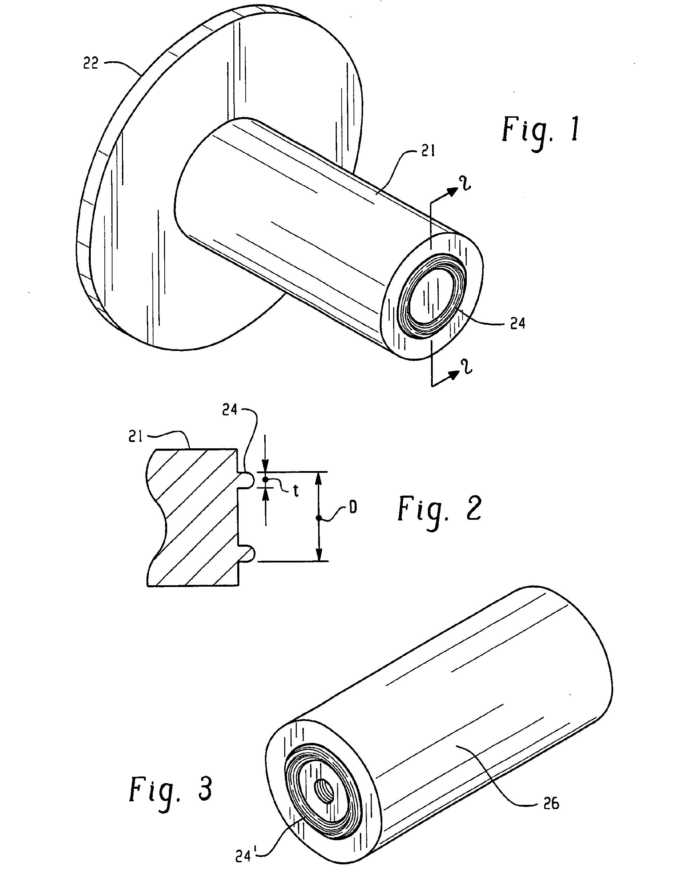

Referring to FIGS. 1,2, and 3, the pole piece and flux collector of the present invention are denoted respectively by reference numerals 21, 22; and, it will be understood that they correspond to the pole piece 11 and flux collector 12 of the device of FIG. 4. In the valve arrangement in the present invention, which it will be understood is generally similar in configuration to that of the device of FIG. 4, the flux collector 21 has an annular rib denoted by reference numeral 24 formed on the lower end of the pole piece 21 as shown in greater detail in FIG. 2. In the presently preferred practice of the invention, the annular rib 24 is formed integrally with the pole piece 24 by powdered metal techniques wherein the powdered pre-form of the part of powdered material of high magnetic permeability is compacted in a die and subsequently sintered to form a finished part of the desired configuration. The annular flux collector 22 is then attached to the upper end of the pole piece 21 by any suitable technique as, for example, press fitting or weldment. In the present practice of the invention, it has found satisfactory to form the annular rib 24 such that the outer diameter denoted by the reference character D is about 60% of the largest transverse dimension of the armature or outer diameter of the armature. The annular rib is raised in the axial direction by a relatively small amount of about 1.4-1.8% of the transverse dimension or outer diameter of the armature. Preferably, the annular rib has a radial thickness denoted by the reference character t of about 5-15% of the outer diameter or transverse dimension of the armature.

Referring to FIG. 3, an alternate version of the invention is shown wherein an armature of the valve of the present invention as indicated at 26 has an annular rib 24' on the upper end thereof as an alternative arrangement to providing the rib on the pole piece as shown in FIG. 1. It will be understood that the configuration and dimensions of the annular rib 24' are similar to those of the rib for the pole piece 21. Furthermore, it will be understood that the annular rib 24' is preferably formed integrally with the armature by powdered metal techniques as for the annularly ribbed pole piece of FIG. 1.

The present invention thus provides novel construction for the magnetic components of a solenoid operated valve energized by a low voltage vehicle on board power supply in which an annular rib is provided in the working air gap to prevent complete closure of the air gap and latching of the solenoid against the pole piece when current to the coil is turned off. The annular rib is preferably formed integrally with one of the pole piece and armature by powdered metal techniques.

Although the invention has hereinabove been described with respect to the illustrated embodiments, it will be understood that the invention is capable of modification and variation and is limited only by the following claims.

## Claims

1. A solenoid operated valve assembly comprising:
(a) a coil of electrically conductive material having a pole piece formed of magnetically permeable material disposed at least partially therein;
(b) a valve body having an inlet, an outlet and a valve obturator moveably disposed in the body or controlling flow between the inlet and outlet with said solenoid mounted thereon;
(c) an armature formed of powdered metal and disposed for movement within the coil and having certain surfaces thereon co-operating with corresponding surfaces on said pole piece to form a working air gap therebetween;
(d) an annular rib formed on one of the surfaces defining said air gap, said rib having the outer diameter thereof not greater than about sixty percent (60%) of the largest dimension of the armature measured transverse to the direction of movement.

2. The valve assembly defined in claim 1, wherein said annular rib has radial thickness in the range of about 5-15% of the said armature transverse dimension.

3. The valve assembly defined in claim 1, wherein said armature is formed of sintered powdered metal.

4. The valve assembly defined in claim 3, wherein said rib is formed integrally with said armature.

5. The valve assembly defined in claim 5, wherein said annular rib is formed integrally with said pole piece.

6. The valve assembly defined in claim 1, wherein said obturator is disposed on an end of said armature remote from said surfaces co-operating to define an air gap.

7. The valve assembly defined in claim 1, wherein said annular rib has a height measured in the axial direction in the range of about 1.4-1.8% of the transverse dimension of the armature.

8. A method of preventing residual magnetic latching of a solenoid operated valve comprising:
(a) disposing a magnetically permeable pole piece at least partially within a coil;
(b) disposing a moveable armature within the coil and forming corresponding surfaces on the coil and armature and forming a working air gap between the corresponding surfaces and effecting movement of a valve obturator with the armature upon coil excitation;
(c) forming an annular rib integrally on one of said corresponding surfaces for minimizing residual magnetic flux concentration.

9. The method defined in claim 8, wherein the step of forming a rib integrally includes sintering powdered metal.
